(19) Europäisches Patentamt

European Patent Office

Office européen des brevets

(11) **EP 1 526 650 A2**

(12) **EUROPEAN PATENT APPLICATION**

(43) Date of publication:
**27.04.2005 Bulletin 2005/17**

(51) Int Cl.⁷: **H04B 1/707**

(21) Application number: **04025346.0**

(22) Date of filing: **25.10.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **24.10.2003 KR 2003074571**

(71) Applicant: **Samsung Electronics Co., Ltd.
Suwon-si, Gyeonggi-do (KR)**

(72) Inventors:
• **Jung, Ji-Yan, Samsung Electronics Co., Ltd.
Suwon-si, Gyeonggi-do (KR)**

• **Suk, Won-Kyu, Samsung Electronics Co., Ltd.
Suwon-si, Gyeonggi-do (KR)**
• **Hong, Ki-Joon, Samsung Electronics Co., Ltd.
Suwon-si, Gyeonggi-do (KR)**

(74) Representative: **Lang, Johannes, Dipl.- Ing.
Paten-und Rechtsanwälte,
Bardehle Pagenberg Dost Altenberg Geissler
Galileiplatz 1
81679 München (DE)**

(54) **Apparatus and method for canceling multipath interference in a mobile communication system**

(57) In a mobile communication system where a signal transmitted on a radio channel is received at one or more rake receiver fingers, each of the fingers receiving a signal includes signals supposed to be received at other fingers, a method of removing the signals for the other fingers from a signal received at a finger is provided. Correlations between a signal supposed to be received at the finger and signals supposed to be received at other fingers are reduced in an input signal of the finger, and the signals supposed to be received at the other fingers with the reduced correlations are removed from the input signal of the finger.

**Description**

**BACKGROUND OF THE INVENTION**

1. Field of the Invention:

The present invention relates generally to multipath search in a mobile communication system. More particularly, the present invention relates generally to an apparatus and method for canceling multipath interference.

2. Description of the Related Art

Along with the rapid development of mobile communication systems and the soaring increase of the amount of data serviced, 3rd generation mobile communication systems were developed to transmit data at higher data rates. For the 3rd generation wireless access standard, Europe adopted asynchronous wideband-code division multiple access (W-CDMA) and North America, synchronous CDMA-2000. These mobile communication systems are typically configured such that a plurality of user equipments (UEs) communicate through one Node B. Yet, they suffer from received signal distortion because of fading on a radio channels during high-rate data transmissions. The fading phenomenon reduces the amplitude of the received signal by several decibels to tenths of decibels. Without compensation at data demodulation, the distorted received signal causes errors in data transmitted by a transmitter, thereby degrading the quality of mobile communication service. Hence, the fading must be overcome to transmit data at high rate without decreasing quality of service (QoS). For this purpose, various diversity schemes are used.

Generally, in CDMA, a rake receiver is used that receives a channel signal with diversity, utilizing the delay spreads of the channel signal. The rake receiver receives multipath signals with receive diversity. Each finger in the rake receiver is assigned to one of signal paths for demodulation. However, if a delay spread is shorter than a certain threshold, the rake receiver does not work well. Time diversity using interleaving and coding is usually applied to a Doppler spread channel. Yet, the time diversity is not viable to a slow the Doppler spread channel.

As described above, a signal arrives at a UE with different time delays and strengths from different paths in a multipath fading mobile environment. To convert the received signals to a signal with a sufficient strength, it is necessary to combine the received signals. To do so, an algorithm is required that estimates the time delay and attenuation of each path.

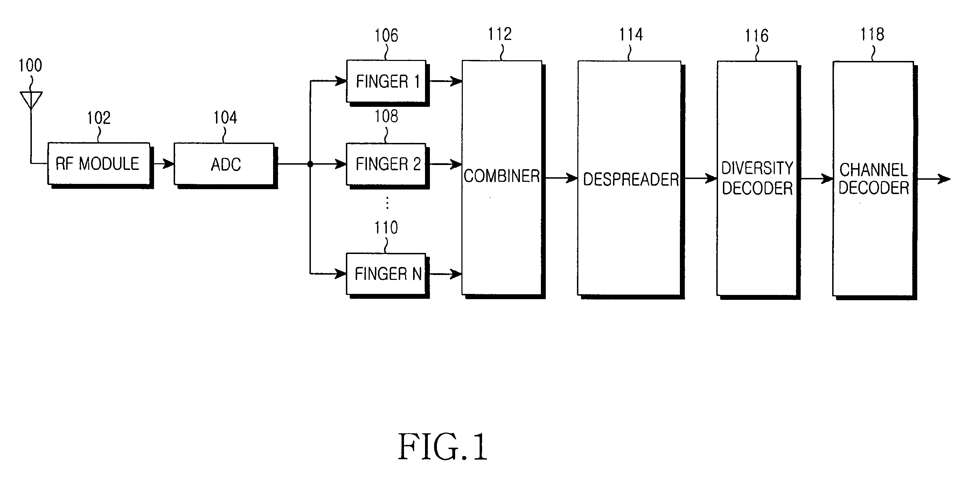

FIG. 1 is a block diagram of a receiver for receiving data from multiple paths in a mobile communication system. With reference to FIG. 1, the reception configuration will be described in detail. The receiver is comprised of a receive antenna 100, an RF module 102, an analog-to-digital converter (ADC) 104, a plurality of rake receiver fingers (fingers) 106 to 110, a combiner 112, a despreader 114, a diversity decoder 116, and a channel decoder 118. While the receiver may further be provided with other components, only receiver components required for the embodiments of the present invention are shown in FIG. 1.

A signal transmitted by a transmitter is received at the receive antenna 100. The received signal is provided to the ADC 104 through the RF module 102. The ADC 104 converts the analog signal to a digital signal. The fingers 106 to 110 divide the digital signal at predetermined intervals. A segment signal is applied to the input of each of the fingers 106 to 110. It is assumed that the interval corresponds to a symbol duration and the number of the fingers is N (finger 1 to finger N). A first symbol from the ADC 104 is fed to finger 1, a second symbol to finger 2, an Nth symbol to finger N, and an (N+1)th symbol to finger 1. The symbols are sequentially fed to each the fingers consecutively. This operation is repeated. Each of the fingers 106 to 110 channel-compensates the received signal. The combiner 112 combines the signals output from the fingers 106 to 110. The despreader 114 despreads the combined signal and outputs it to the diversity decoder 116. To increase transmission efficiency, the transmitter transmits the signal through a plurality of transmit antennas. In addition, the transmitter assigns different weights to signals for the transmit antennas, thereby increasing the diversity effect. The diversity decoder 116 compensates for the weighted signals. The channel decoder 118 decodes the output of the diversity decoder 116.

Aside from quadrature phase shift keying (QPSK), 16 quadrature amplitude modulation (16QAM) can also be used as a modulation scheme in the mobile communication system. To use 16QAM for a radio channel, the transmission quality of the radio channel must be sufficiently good. Therefore, a multipath interference canceller is used to suppress performance degradation involved in high-rate transmission of a signal with multiple codes in a multipath environment. The multipath interference canceller cancels interference from other users within the same cell as well as multipath interference from its own signal.

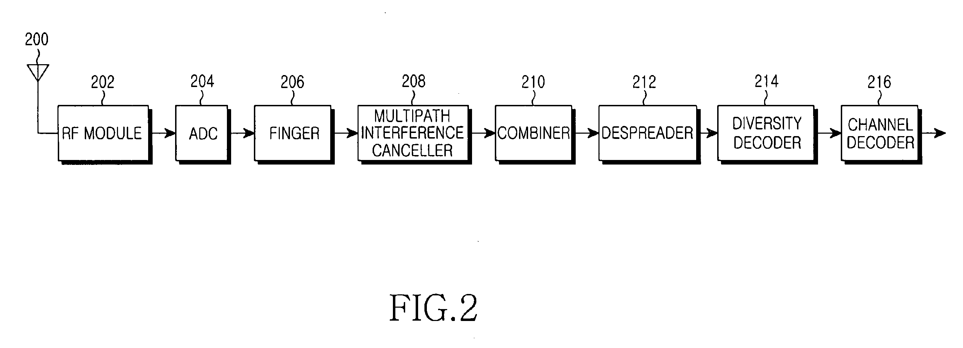

FIG. 2 is a block diagram of a typical receiver capable of canceling multipath interference in the prior art mobile communication system. Referring to FIG. 2, the receiver is comprised of a receive antenna 200, an RF module 202, an ADC 204, a rake receiver finger (finger) 206, a multipath interference canceller 208, a combiner 210, a despreader 212, a diversity decoder 214, and a channel decoder 216. While other components than shown in FIG. 2 may be further included in the prior art receiver capable of canceling multipath interference, only the components related to the present invention will be described.

A signal transmitted by a transmitter is received at the receive antenna 200. The received signal is provided to the ADC 204 through the RF module 202. The ADC 204 converts the analog signal to a digital signal and provides the digital signal to the finger 206. While only one finger is shown, it is well known to those skilled in the art of the present invention that the rake receiver is provided with a plurality of fingers. Each finger channel-compensates the received signal. The multipath interference canceller 208 cancels multipath interference from the signals received from the fingers. The signal received at any one finger also includes signals for the other fingers. This occurs because a signal transmitted for a predetermined time period is propagated across a plurality of time periods in view of the nature of a radio channel and thus a plurality of signals are received for any one particular time period. Therefore, the multipath interference canceller cancels the signal components of the other fingers from the signals received at each finger.

The combiner 210 combines the interference-cancelled signals output from the multipath interference canceller 208. The diversity decoder 214 decodes the combined signal in correspondence with the diversity coding scheme used in the transmitter. The channel decoder 216 channel-decodes the diversity-decoded signal.

The multipath interference canceller 208 illustrated in FIG. 2 cancels signal components of other fingers from a signal received at a particular finger through simple subtraction. for example, if there are eight fingers at the receiver, the signal components of other fingers are removed from a signal received at a first finger (finger 1) can be expressed by the following:

$$f(x)= f(1)-(f(2,1)+ f(3,1)+...+f(8,1)) \qquad (1)$$

where f(x) is the output of the multipath interference canceller obtained by canceling the signal components of the other fingers from the signal of finger 1. f(1) denotes the signal received at finger 1, f(2,1) denotes a signal component for finger 2 included in the signal of finger 1, f(3,1) denotes a signal component for finger 3 included in the signal of finger 1, and f(8,1) denotes a signal component for finger 8 included in the signal of finger 1.

As noted from Eq. (1), the multipath interference canceller simply subtracts other finger signal components from a signal received at a particular finger. Considering that the finger signals are mutually correlated, a signal supposed to be received at the finger cannot be estimated accurately through the simple subtraction. Thus, there is a need for a solution to this problem.

## SUMMARY OF THE INVENTION

An object of the present invention is to substantially solve at least the above problems and/or disadvantages and to provide at least the advantages below. Accordingly, an object of the present invention is to provide an apparatus and method in the form of an algorithm for reducing the correlations of signals received at rake receiver fingers.

Another object of the present invention is to provide an apparatus and method for reducing hardware size by repeating the same operation in one component.

A further object of the present invention is to provide an apparatus and method for reducing unnecessary power consumption by reducing hardware size.

The above objects are achieved by providing an apparatus and method for canceling multipath interference in a mobile communication system.

In a mobile communication system where a signal transmitted on a radio channel is received at one or more rake receiver fingers (fingers), each of the fingers receives a signal including signals supposed to be received at other fingers. According to one aspect of the present invention, a method is provided for removing signals for other fingers from a signal received at a particular finger. Correlations between a signal supposed to be received at the finger and signals supposed to be received at other fingers are reduced in an input signal of the finger, and the signals supposed to be received at the other fingers with the reduced correlations are removed from the input signal of the finger.

According to another aspect of the present invention, a plurality of fingers each receives a signal at a predetermined interval, and a multipath interference canceller reduces correlations between a signal supposed to be received at the finger and signals supposed to be received at other fingers in an input signal of the finger, and removes the signals supposed to be received at the other fingers with the reduced correlations from the input signal of the finger.

## BRIEF DESCRIPTION OF THE DRAWINGS

The above and other objects, features and advantages of the present invention will become more apparent from the following detailed description when taken in conjunction with the accompanying drawings in which:

FIG. 1 is a block diagram of a prior art receiver for receiving data from multiple paths in a mobile communication system;

FIG. 2 is a block diagram of a prior art receiver for canceling multipath interference in the mobile communication system;

FIG. 3 is a block diagram of a receiver for canceling multipath interference in a mobile communication system according to an embodiment of the present invention;

FIG. 4 is a detailed block diagram of a multipath interference canceller illustrated in FIG. 3;

FIG. 5 is a block diagram of a receiver for canceling multipath interference in a mobile communication system according to another embodiment of the present invention; and

FIG. 6 is a flowchart illustrating a multipath interference cancellation operation according to an embodiment of the present invention.

## DETAILED DESCRIPTION OF THE PREFERRED EMBODIMENTS

Preferred embodiments of the present invention will be described herein below with reference to the accompanying drawings. In the following description, a detailed description of known functions and configurations incorporated herein have been omitted for conciseness.

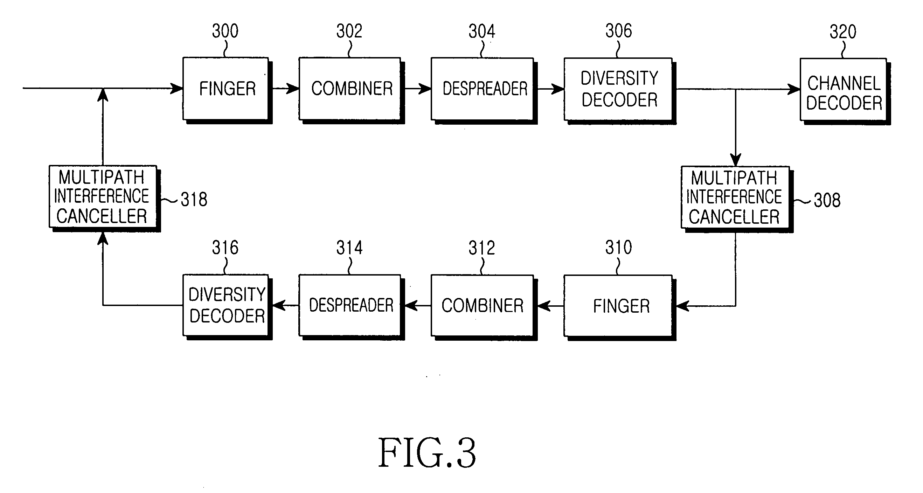

FIG. 3 is a block diagram of a receiver for canceling multipath interference in a mobile communication system according to an embodiment of the present invention.

Referring to FIG. 3, an ADC (not shown) converts an analog signal received through a receive antenna to a digital signal and provides it to a rake receiver finger (finger) 300. While only one finger is shown in FIG. 3, it well known to those skilled in the art of the present invention that the receiver is provided with at least two fingers, and usually as many as eight fingers (other designs can have other numbers of fingers; the number of fingers discussed herein is not to be taken in a limiting sense). The finger 300 includes a storage part, a descrambler part, and a channel compensator. The finger 300 searches for an optimum value in the received signal and stores it at predetermined intervals. While each finger has a storage part for storing the searched signal, the plurality of fingers can share one common storage part. If, for example, there are eight fingers (finger 1 to finger 8), finger 1 stores a signal received for a first time period, finger 2 stores a signal received for a second time period, and so on, until finger 8 stores a signal received for an eighth time period. A signal received for a ninth time period is stored at finger 1 and a signal received for a tenth time period is stored at finger 2, and so on. In this manner, the eight fingers sequentially store received signals at predetermined intervals. The interval can be one chip duration of the received signal or set according to user selection according to the embodiments of the present invention. The particular manner in which the received signals are processed for the first through eighth time periods will be described in greater below.

As described above, signals transmitted for at least two time periods are received in one time period. Therefore, for each time period, the signal transmitted for that particular time period must be detected. Yet, since signals received in different time periods are correlated to one another, simple subtraction of other finger signal components from a signal received at one finger does not result in the signal component for the finger. The correlations among the finger signals therefore are first substantially removed and/or reduced, and then the other finger signals are substantially removed from the signal of the finger. The substantial elimination of the other finger signals from the finger signal will now be described.

The descrambler in the finger reads data from the storage and descrambles the data with primary and secondary scrambling codes used in the transmitter. The channel compensator in the finger compensates for distortion involved in the radio channel environment using a channel estimation value. The channel estimation value is obtained from a common pilot channel (CPICH). A combiner 302 combines the distortion-compensated signals received from the eight fingers.

A despreader 304 despreads the combined signal with a spreading code used in the transmitter for identifying the channel. The diversity decoder 306 checks the diversity scheme used in the transmitter and diversity-decodes the despread signal according to the diversity scheme. The output data signal from the diversity-decoder 308 is fed to another multipath interference canceller 308 and a control signal thereof to a channel decoder 320. Thus, the data signal output from the diversity decoder 306 is subject to one more multipath interference cancellation operations in the multipath interference canceller 308 prior to demodulation. The data signal output from the diversity decoder 306 is then fed to the channel decoder 320 as a high-speed downlink shared channel (HS-DSCH) signal. The control signal output from the diversity decoder 306 is provided to the channel decoder 320 as a high-speed shared control channel (HS-SCCH).

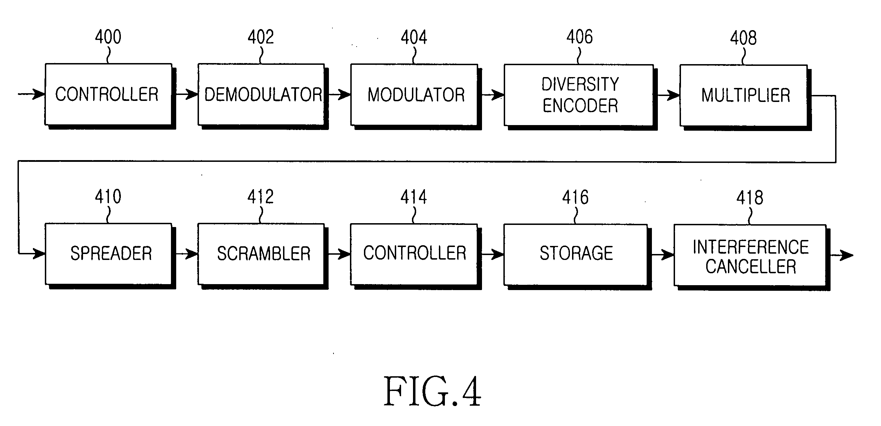

According to an embodiment of the present invention, the despreader 304 outputs 16 separate channel components serially to the diversity decoder 306. The 16 channel components are fed to the diversity decoder 306 at predetermined intervals so that they can be diversity-compensated in the single diversity decoder 306. The operation of the multipath interference canceller 308 will be described later in more detail with reference to FIG. 4. The multipath interference canceller 308 reduces the correlations between the finger signals by eliminating interference components.

Although decoding can be carried out using the finger signals with reduced correlations, the multipath interference cancellation is repeated to further reduce the correlations between the finger signals according to the embodiment of the present invention. A second rake receiver finger (finger) 310, a second combiner 312, a second despreader 314, a second diversity decoder 316, and a second multipath interference canceller 318 operate in the same manner as the finger 300, the combiner 302, the despreader 304, the diversity decoder 306, and the multipath interference canceller 308 described above.

After the multipath interference cancellation is performed a first time through both multipath interference cancellers 308, 318, a multipath interference-free signal from the multipath interference canceller 318 is provided to the finger 300. In the embodiment of the present invention, the multipath interference cancellation is carried out twice by the multipath interference cancellers 308 and 318. While the number of multipath interference cancellations can be set according to user selection, the time required for signal processing increases as the number of multipath interference cancellations exceeds a predetermined number. Therefore, the user must set the number of multipath interference cancellations considering the degree to which multipath interference is cancelled, the processing time, and the frequency of a system clock signal.

After two multipath interference cancellations occur, the output of each finger 300 is provided to the channel decoder 320 through the combiner 302, the despreader 304, and the diversity decoder 306. The channel decoder 320 channel-decodes the received data signal.

FIG. 4 is a block diagram of the multipath interference canceller 308, 318 according to the embodiment of the present invention.

Referring to FIG. 4, a controller 400 detects a spreading code used for a received data signal. If the spreading code is known, the controller 400 notifies a demodulator 402 of a demodulation scheme found by a control signal. The demodulator 402 demodulates the data signal using the demodulation scheme. A modulator 404 modulates the demodulated data signal and a diversity encoder 406 diversity-encodes the modulated data signal in the same manner as in the transmitter. A multiplier 408 multiplies the diversity-coded signal by the distortions of the radio channel in the reverse order of the channel compensation at the receiver. There are a plurality of distortions depending on the status of the radio channel. One transmitted signal is propagated to a receiver as multiple signals under a complex radio channel environment. Therefore, the multiplier 408 outputs a plurality of signals, considering the complex radio channel environment. Thus, the receiver can estimate the transmitted signal accurately.

The output of the multiplier 408 is subject to operations performed in the transmitter. A spreader 410 spreads the signal with a spreading code and a scrambler 412 scrambles the spread signal with first and second scrambling codes. The spreading code and the first and second scrambling codes are identical to those used in the transmitter. The resulting modulation symbols have reduced correlations between paths, thereby eliminating multipath interference.

A controller 414 controls the gain generated by each component. A storage 416 sequentially provides storage for each multipath signal. The multiplier 408 converts one combined signal to multipath signals considering the radio channel status and the multipath signals are stored in the storage after processing. These multipath signals have reduced correlations.

An interference canceller 418 calculates the difference between the signal stored in the storage 416 and a signal buffered in a buffer of the finger 300 and outputs the difference signal. This operation can be expressed as

$$f'(x)=f(1)-(f'(2,1)+f'(3,1)+...+f'(8,1)) \qquad (2)$$

where f'(x) denotes the output of the interference canceller 418 and (f'(2,1)+ f'(3,1)+ ... +f'(8,1)) denotes the signals with reduced correlations stored in the storage 416. f'(2,1) denotes the signal component of finger 2 with a reduced correlation, received at finger 1, and f'(3,1) denotes the signal component of finger 3 with a reduced correlation, received at finger 1. Eq. (2) describes the interference cancellation of the input signal of finger 1 at a rake receiver having eight fingers. Interference is cancelled from the input signals of finger 2 to finger 8 in the same manner.

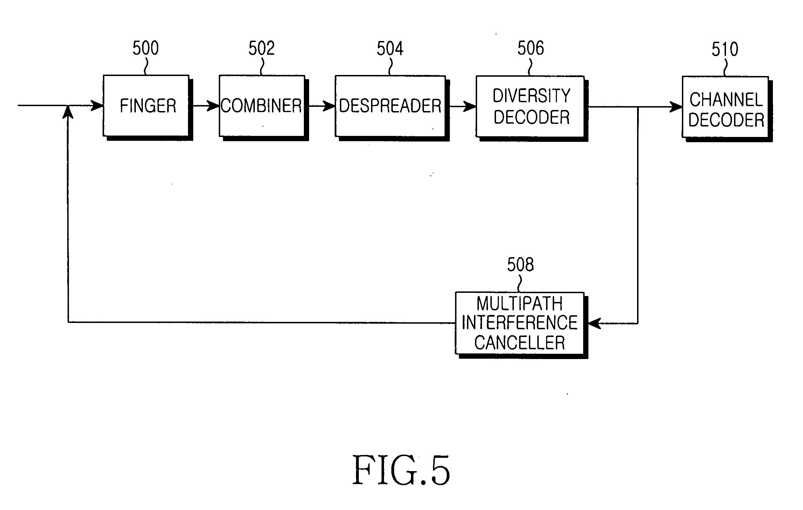

FIG. 5 is a block diagram of a receiver for canceling multipath interference in a mobile communication system according to another embodiment of the present invention. The receiver illustrated in FIG. 5 differs from that illustrated in FIG. 3 in that the latter performs one multipath interference cancellation in one multipath interference canceller, while the former performs multipath interference cancellation repeatedly in one multipath interference canceller. For two multipath interference cancellations, one received signal is processed three times in a finger 500 through a diversity decoder 506, passing through a multipath interference canceller 508 twice. While the finger 300 illustrated in FIG. 3 stores a signal received for a predetermined time period, the finger 500 stores a multipath interference-cancelled signal as well as the received signal. For two multipath interference cancellations, the data storing operation occurs three times in the finger 500: storing the received signal, storing a first multipath interference-cancelled signal, and storing a second multipath interference-cancelled signal. Table 1 below lists the number of multipliers required for the receivers illustrated in FIGs. 3 and 5.

(Table 1)

|  | Number of multipliers |
|---|---|
| FIG. 3 | 340 |
| FIG. 5 | 42 |
| difference | 298 |

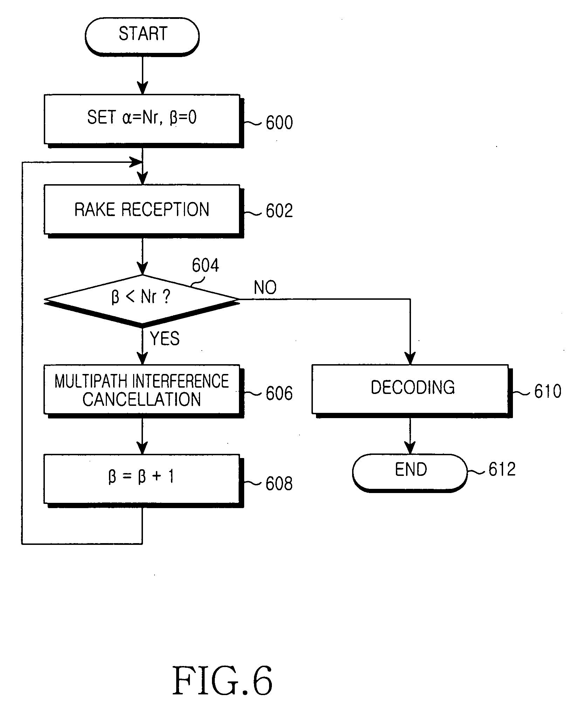

FIG. 6 is a flowchart illustrating method for multipath interference cancellation operation in the receiver according to an embodiment of the present invention.

Referring to FIG. 6, the receiver sets α, a variable indicating the number of multipath interference cancellations to be performed, to Nr, and β, a variable indicating the number multipath interference cancellations that have been performed to 0, in step 600..

In step 602, the receiver performs a rake reception through the finger 300 (or 500) to the diversity decoder 306 (or 506). The receiver 604 compares β with Nr in decision step 604. If β is less than Nr ("Yes" path from decision step 604), the procedure goes to step 606, and if β is equal to or greater than Nr ("No" path from decision step 604), the procedure goes to step 610. In step 606, the receiver performs a multipath interference cancellation in the manner described before with reference to FIG. 4. The receiver increments β by 1 in step 608 and returns to step 602. In step 610, the receiver decodes the data signal and terminates the procedure in step 612.

In accordance with the embodiments of the present invention as described above, a transmitted signal is accurately estimated at a receiver by reducing the correlations between signals received at a plurality of rake receiver fingers. Also, the transmitted signal can be accurately decoded by reducing the correlations between a signal component modulated with a channelization code assigned to the receiver and signal components modulated by other channelization codes in the input signal of a finger. The repetition of rake reception and multipath interference cancellation in one component reduces hardware size.

While the invention has been shown and described with reference to certain preferred embodiments thereof, it will be understood by those skilled in the art that various changes in form and details may be made therein without departing from the spirit and scope of the invention as defined by the appended claims.

**Claims**

1. In a mobile communication system where a signal transmitted on a radio channel is received at one or more rake receiver fingers, each of the fingers receiving a signal including signals supposed to be received at other fingers, a method of removing signals for other fingers from a signal received at a finger, comprising:

   reducing correlations between a signal supposed to be received at the finger and signals supposed to be received at other fingers in an input signal of the finger; and
   removing the signals supposed to be received at the other fingers with the reduced correlations from the input signal of the finger.

2. The method of claim 1, wherein the step of reducing correlations comprises:

   combining input signal of the fingers;
   demodulating the combined signal;
   modulating the demodulated signal; and
   converting the modulated signal to multiple signals, taking a radio channel environment into account.

3. The method of claim 2, further comprising:

   separating the combined signal into a data signal and a control signal by despreading the combined signal with an orthogonal code.

4. The method of claim 2, further comprising:

   repeating the correlation reducing step a predetermined number of times.

5. The method of claim 4, wherein the predetermined number is 2.

6. The method of claim 1, further comprising:

   decoding a signal obtained by removing the signals supposed to be received at the other fingers with the reduced correlations from the input signal of the finger.

7. In a mobile communication system where a signal transmitted on a radio channel is received at one or more fingers, each of the fingers receiving a signal including signals supposed to be received at other fingers, an apparatus for removing signals for other fingers from a signal received at a finger, comprising:

   a plurality of rake receiver fingers each of which is for receiving a signal at a predetermined interval; and
   a multipath interference canceller for reducing correlations between a signal supposed to be received at the finger and signals supposed to be received at other fingers in an input signal of the finger, and removing the signals supposed to be received at the other fingers with the reduced correlations from the input signal of the finger.

8. The apparatus of claim 7, further comprising:

   a combiner for combining signals received at the fingers; and
   a despreader for dispreading the combined signal, for channelization.

9. The apparatus of claim 7, wherein the multipath interference canceller comprises:

   a demodulator for demodulating the despread signal;
   a modulator for modulating the demodulated signal; and

a multiplier for multiplying the modulated signal by a value indicating a radio channel status and outputting multiple signals.

**10.** The apparatus of claim 9, wherein the multipath interference canceller further comprises:

a storage for storing the multiple signals received from the multiplier in an input order.

**11.** The apparatus of claim 7, wherein the multipath interference canceller repeats the correlation reduction a predetermined number of times.

**12.** The apparatus of claim 11, wherein the predetermined number is 2.

**13.** The apparatus of claim 7, further comprising:

a decoder for decoding a signal obtained by removing the signals supposed to be received at the other fingers with the reduced correlations from the input signal of the finger.

FIG.1

EP 1 526 650 A2

200

| 202 | 204 | 206 | 208 | 210 | 212 | 214 | 216 |
|-----|-----|-----|-----|-----|-----|-----|-----|
| RF MODULE | ADC | FINGER | MULTIPATH INTERFERENCE CANCELLER | COMBINER | DESPREADER | DIVERSITY DECODER | CHANNEL DECODER |

FIG.2

EP 1 526 650 A2

300 302 304 306 320

FINGER → COMBINER → DESPREADER → DIVERSITY DECODER → CHANNEL DECODER

318 MULTIPATH INTERFERENCE CANCELLER

308 MULTIPATH INTERFERENCE CANCELLER

316 314 312 310

DIVERSITY DECODER ← DESPREADER ← COMBINER ← FINGER

FIG.3

FIG.4

EP 1 526 650 A2

EP 1 526 650 A2

FIG.5

START

SET α=Nr, β=0 ∼600

RAKE RECEPTION ∼602

604
β < Nr ? —— NO

YES

MULTIPATH INTERFERENCE
CANCELLATION ∼606

β = β + 1 ∼608

DECODING ∼610

END ∼612

FIG.6